# EUROPEAN PATENT APPLICATION

(11) **EP 1 208 933 A1**
(43) Date of publication of application: **29.05.2002**
(21) Application number: 00204094.7
(22) Date of filing: 21.11.2000
(51) Int. Cl.: B23D 47/04, B25J 15/02, B65H 31/30

(54) **A system for processing wooden plates including a robot for handling one or more plates**

(71) Applicant: Giben Scandinavia A/S, 5260 Odense S (DK)
(72) Inventor: Fuglsang, Poul, 5230 Odense M (DK); Kostner, Poul, 5270 Odense N (DK); Rasmussen, Karsten, 5750 Ringe (DK)
(74) Representative: Elmeros, Claus

(57) **Abstract**

The invention relates to a plate handling system comprising a cutting machine (1) for cutting a number of plates (5a,5b). The system also comprises a conveyor (2a,2b,7a-7g,8) for transporting the plates (5a,5b) after cutting and a robot (3a,3b) with a robot head (4,4a,4b), where said robot head (4,4a,4b) has lifting means for lifting one or more of said cut plates (5a,5b) from said conveyor (2a,2b,7a-7g,8).

The invention also relates to a robot head (4,4a,4b), a method of moving one or more plates (5a,5b) with a robot (3a,3b) having a robot head (4,4a,4b) and use of the robot head (4,4a,4b) and a method in a wooden plate handling system.

## Description

### Background of the invention

The present invention relates to a processing system according to the preamble of claim 1, a robot head, a method and use thereof in association with the processing system.

Plate processing systems, such as systems including a wooden plate-cutting machine, have been known for quite a while. Especially systems for cutting large wooden plates into smaller plates have been used in the furniture industry.

Before and after the cutting machine, the plate or stack of plates is usually moved by means of different kinds of conveyors. After treatment in the cutting machine, the plate or stack of plates is moved by the conveyors to a discharge location where workers have to lift them off the conveyor. The workers will usually lift the plates from the working area of the cutting machine and conveyors to storage locations in the factory or to a vehicle transporting the plates to a storage location or to a place for further utilisation.

A problem with the known systems is the requirement of one or more persons having to move the plates from the working area. During the day, each person will have to lift many and heavy loads with the possibility of serious damage to the person's health. Another risk to the person's health is the general environment at the working area which is dusty, noisy etc.

Another problem relates to the way the persons stack the plates after having moved the plates away from the conveyor. Usually, the plates will be stacked on a pallet which allows easy further transport. However, to ensure easy further transport in a safe manner, it is necessary to have the plates placed in a very homogenous stack which is not possible for the persons without using to much time. If the stack is not homogenous, it occupies more space and may slide of the pallet or in another way collapse during transport. Also, the plates are more exposed to damage with the sides and corners sticking out.

The object of the invention is to provide a plate processing system without the above-mentioned problems. Especially, it is an object of the invention to handle the plates in a faster, less harmful and more efficient way.

### The invention

When, as stated in claim 1, said processing system further comprises at least one robot with a robot head, and where said robot head has gripping means for gripping a stack comprising one or more plate-like objects, it is possible to handle the stack in a more homogenous way than with the known technique.

With the processing system, a system is achieved which handles the plate-like objects in a faster, less harmful and more efficient way.

The phrase "at least one robot with a robot head" in the claim is to be understood as one robot with one robot head or a number of robots with one robot head each.

When, as stated in claim 2, said plate-like objects are wooden plates, the invention is particularly advantageous since the wooden plates are vulnerable to bumps and similar kinds of damage.

Especially in connection with furniture production, it is important to ensure that the wooden plates are not damaged at the beginning of the furniture production. Otherwise, quality control has to be very strict to scrap the damaged plates and hereby avoid complaints from the customers.

It should be emphasized that the term "plates" in the area of wooden plates may both be boards and panels, where the term boards primarily means untreated wooden plates and the term panels means treated wooden plates.

In accordance with the invention, claim 3 states that a robot head for handling one or more plates comprising at least two supporting fingers for insertion below the plates, a frame including holding means for clamping said plates against said supporting fingers and a surface member for alignment of said plates, and means for providing a relative movement between said supporting fingers said surface member.

The robot head is hereby capable of handling one or more plates in a safe and reliable way. At the same time, the robot head will be able to place several plates in a perfectly aligned stack.

When, as stated in claim 4, a movable part of said holding means is movable by means of pneumatic means, a further advantageous embodiment of the invention has been obtained. By using pneumatic means, hydraulic problems with especially leakage of hydraulic oil is avoided. A leakage of oil stained on a wooden plate will damage it in such a way that it is has to be rejected. The nature of air is also advantageous in connection with holding of especially wooden plates since the air will be compressed at initial contact with the plates. To some extend, this protects the quite soft plates against pressure marks if the initial step is used to control the pressure.

An electrical system i.e. involving electric linear actuators has the disadvantages of being more complicated and heavier than a pneumatic system.

However, it should be noted that the holding means may also be movable by means of hydraulic or electric means.

When, as stated in claim 5, said pneumatic means comprises pressure control means, it is possible to protect the plate-like objects against damage such as pressure marks. However, the pressure will usually only change between one particular pressure or a few pre-selected pressures and no pressure at all.

An example of this is when moving different types of wooden plates of different hardness such as oak and pine plates. A pressure level which will not damage an oak plate may inflict severe pressure marks on a pine plates which makes the pressure control advantageous. Generally, the pressure control opens up for the possibility of adjusting the processing system to any given job.

When, as stated in claim 6, said holding means and said fingers are placed above each other in pairs, it is possible to firmly hold a plate or a stack of plates without pressing it out of shape e.g. by bending. At the same time, it is easier to control the pressure to a given area if the holding means and supporting fingers are placed together and hereby avoid pressure marks on the plates.

When, as stated in claim 7, the fingers are divided into two groups with the same number of fingers in each, it is possible to handle longer plates and create improved balance qualities. In general, the positions of the fingers shall, of course, correspond to the positions of the roller spaces when used in connection with roller conveyors.

When, as stated in claim 8, the distance between the two groups of fingers corresponds to the mid section of a standard or special pallet, it is possible to stack the plates on the pallet and subsequently lift the pallet with the robot e.g. onto a form of transportation. This provides a very efficient system where the robot is capable of handling several work processes which may reduce the need for further machines, such as forklift trucks, to transport the pallet. Fewer machines transporting the pallet also reduces the risk of damage to the plates.

In accordance with the invention, claim 9 states a method of moving a stack comprising one or more plate-like objects from a conveyor to another position with at least one robot having a robot head, where said robot head grips said stack by means of at least two supporting fingers of said robot head are inserted below the plates and the holding means of said robot head clamps said plates against said supporting fingers, where the plates are lifted by the at least one robot and moved to another position, and where said supporting fingers are moved relative to said surface member and hereby release the plates from the robot head.

Hereby a further advantageous embodiment of the invention has been obtained.

In accordance with the invention, claim 10 states a method where the pneumatic pressure of one or more of the holding means is controlled during handling the plates. Hereby, it is possible to control the plates during moving and placing of the same. Especially while placing a stack of plates, it is very advantageous to loosen the holding in a smooth way or to hold back in one or more areas when slacking in other areas.

### Figures

The invention will be described in the subsequent text with reference to the figures, where
- fig. 1: shows a preferred embodiment of a plate processing system according to the invention,
- fig. 2: shows a robot and robot head seen from the side,
- fig. 3a: shows a side view of a robot with a robot head in a first position,
- fig. 3b: shows a side view of a robot with a robot head in a second position,
- fig. 4a: shows a perspective view of a robot head in a first position and
- fig. 4b: shows a perspective view of a robot head in a second position.

### Detailed description

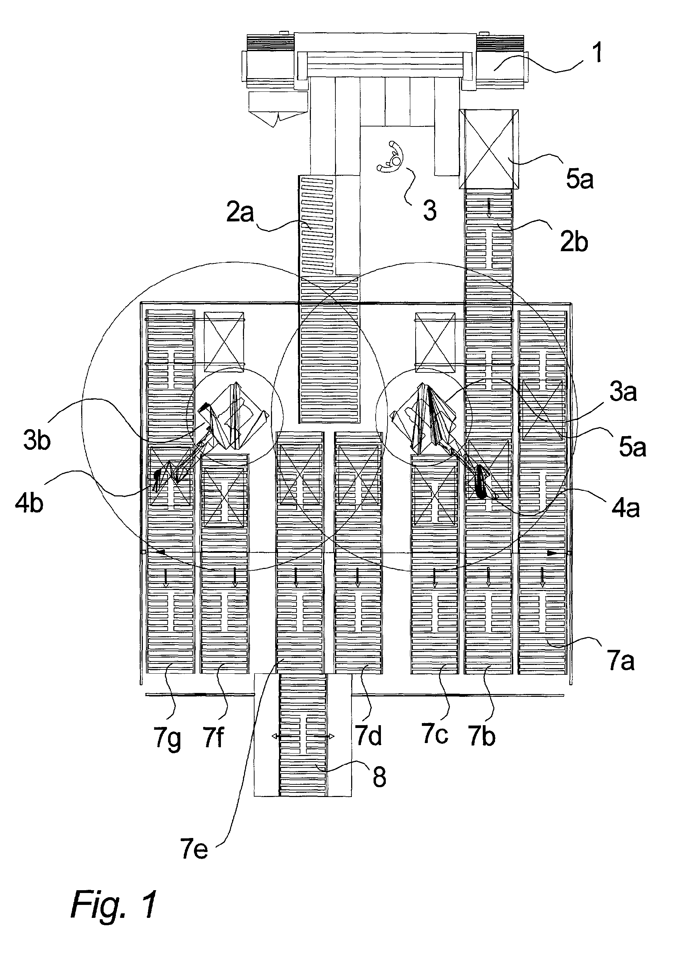

Figure 1 shows a preferred embodiment of a plate processing system according to the invention. The plate processing system comprises a plate cutting machine 1 for dividing large plates into a number of smaller plates. A normal application would be for division of large wooden plates into panels for use in furniture fabrication i.e. for use in building closets or bookshelves.

The cutting machine 1 can often cut more than one plate at the time and place the plates on top of each other. The system may also involve other processes such as drilling of the necessary holes in the plates.

After the cutting process, the plates or usually stacks of plates 5a, 5b are transported on one or more lines of conveyors. The conveyor 2a transports the stacks of plates to a loading area where two robots 3a, 3b may load the stacks from the conveyors to other positions. The position can be a pallet already placed on one of the conveyors 7a-7g i.e. by one of the robots. On the pallet, plates are stored until a certain number has been reached. Further conveyors 8 may hereafter transport the pallet from the loading area to a discharge area where it will usually be loaded onto a transport such as a conveyor transport for further transportation to a lorry or a storage area for later transport.

A worker 3 placed next to the cutting machine 1 may direct plates to the conveyor 2b or a pallet on the conveyor 2b if the plates are not to be handled by the robots 3a, 3b. The plates will subsequently be moved to the discharge area.

In a preferred embodiment of the invention, the conveyors will be roller conveyors with a certain distance between the rollers.

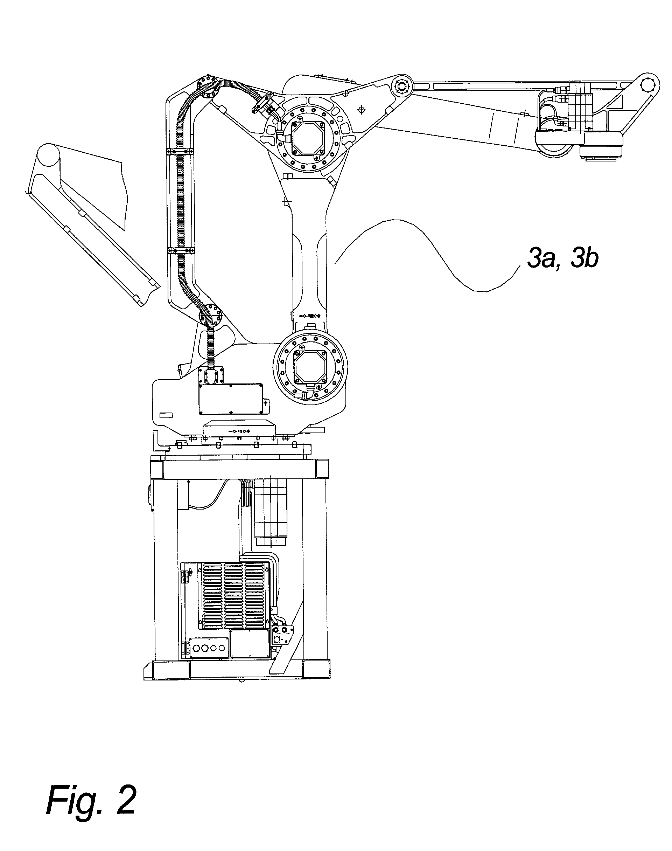

Figure 2 shows a standard robot with a robot head according to the invention. The robot has several flexible joints which allow the robot to place the robot head in practically any position in relation to the stack of plates. Also, the robot has lines from centrally placed electrical and pneumatic supply means to the robot head.

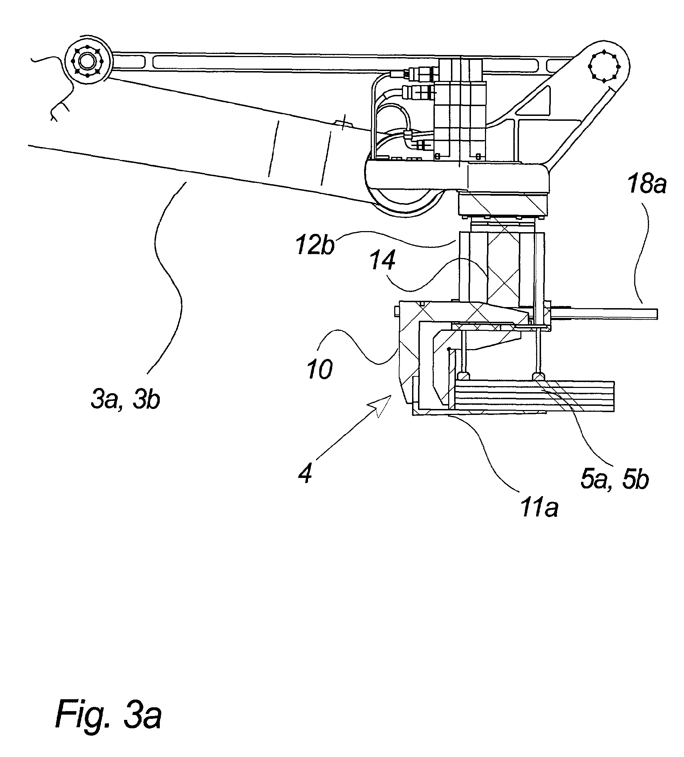

Figure 3a shows a preferred embodiment of a robot head 4a, 4b to be used in connection with a plate processing system. In this embodiment, the robot head has grabbed a stack of plates. The robot head is mechanically connected to the robot (only partly illustrated in the figure) by a robot connection 14 which will usually be a flexible joint. The robot head has a movement actuator (not shown in the figure) for controlling the movement of parts of the robot head in relation to each other. There are also electric connections for transfer of electric power from the robot to the electric components on the robot head.

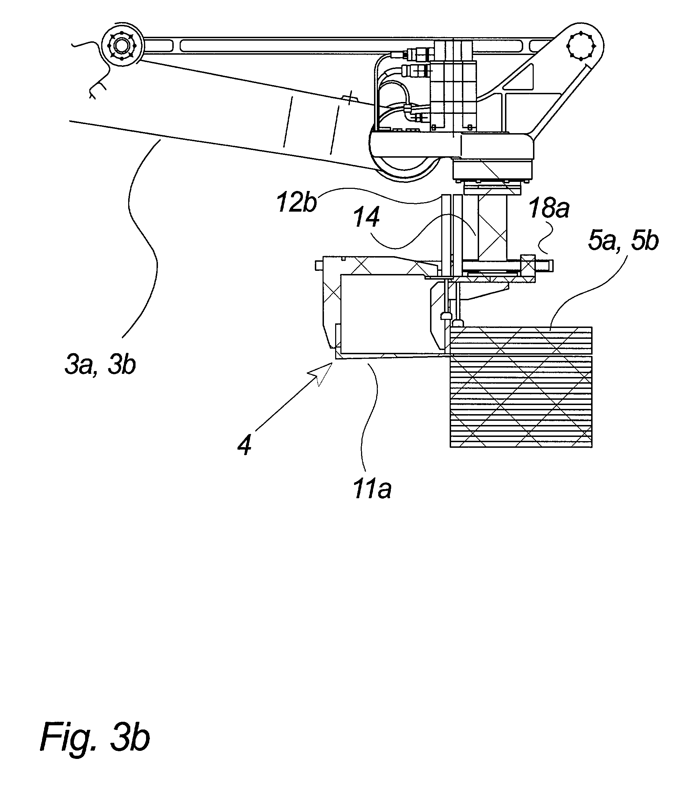

Figure 3b shows the same embodiment as figure 3a where the stack of plates grabbed by the robot head is placed on a pallet which already comprises a number of plates.

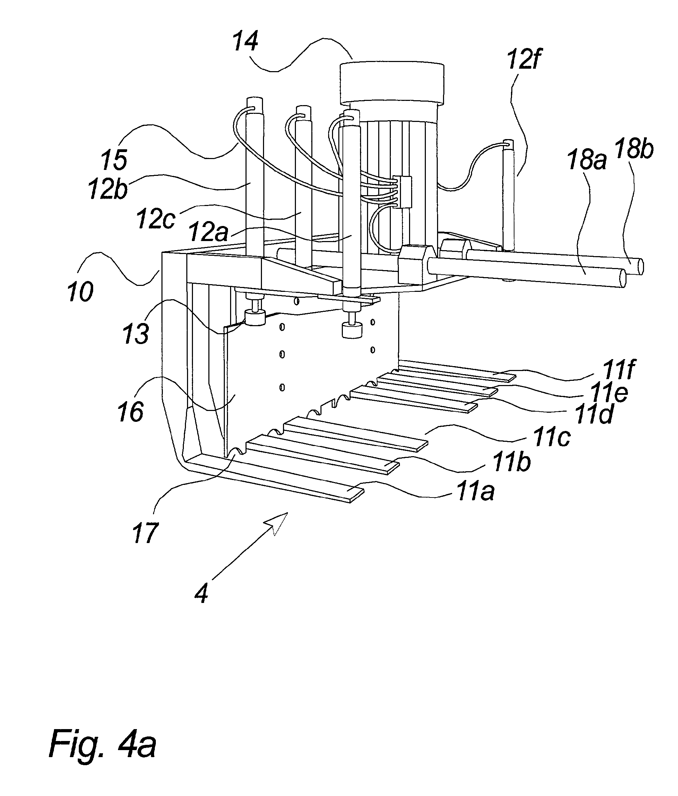

Figure 4a shows a preferred embodiment of a robot head to be used together with a robot in a plate processing system. The robot head comprises a frame where a number of supporting fingers stretch out at the bottom and make out the lowest part of the robot head. At the top, two horizontal arms also stretch out at each corner of the frame with holding means mounted at the end of each arm. The holding means are a pneumatically driven actuator comprising a cylinder and a vertical movable part. Each of the holding means is mounted above one of the supporting fingers. All holding means have connections 15 to a centrally placed pneumatic driving means such as a pressure pump. The connection extends through the centre of the robot connection means 14 and the robot to the driving means.

In the middle of the top of the frame, guidance rods extend and work as mechanical guidance means. A slideable collar is mounted onto each of the rods. The collars themselves are joined to a plate where the plate holds a number of further holding means and the robot connection means 14 to connect the robot head and the robot.

The further holding means are also mounted above the supporting fingers in pairs each consisting of one support finger and one holding means above each other.

A substantially vertical surface member for alignment of plates from the plate processing system is mounted to the underside of the plate. The vertical surface member may i.e. be a single plate or a number of plate parts or row-aligned bars. The surface member stretches from the underside of the plate to just above the supporting members. Between the supporting fingers, the surface member extends further in the form of teeth.

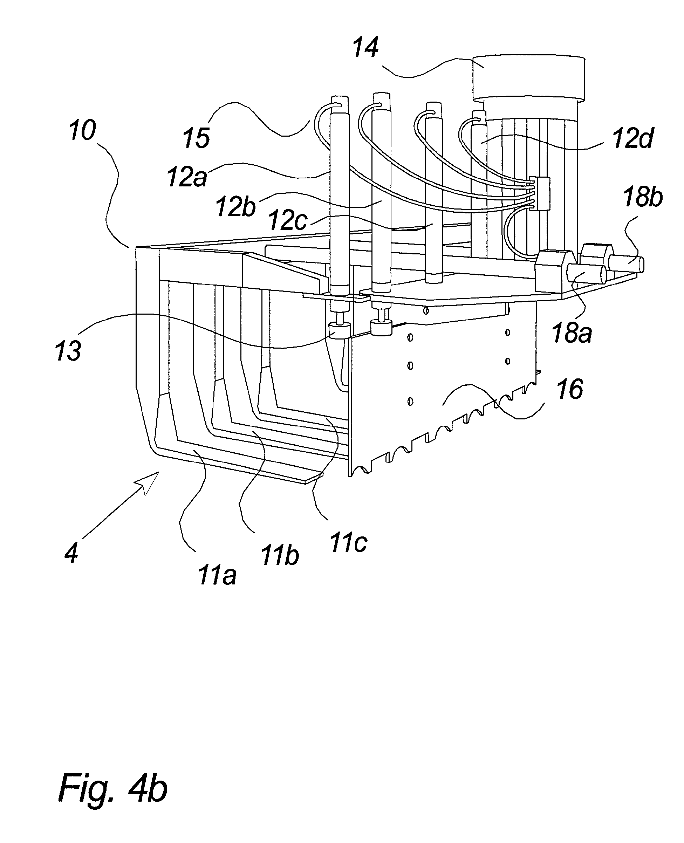

Figure 4b shows the robot head in a second position where figure 4a shows the robot head in a first position. The frame is horizontally slideable on the rods in relation to the plate with the collars and the attached means. The movement actuator (not shown in the figure) is mounted on the robot head between the guidance rods and can push against the frame which initiates movement of the supporting fingers from a first stationary position to a second and reverse. The movement may be limited by the length of the movable part in the actuator or by electrical or mechanical end stops.

According to the invention, the use of the robot head in a plate processing system involves a method with several steps including lifting and placing of a stack of plates. Figure 4a shows the robot head in a position where it may lift a stack of plates and figure 4b shows the robot head in a position shortly after placing of the stack. The first step includes moving the supporting fingers below the stack of plates when they are transported on a roller conveyor. The distance between the rollers ensures that each of the supporting fingers may slide between two rollers and hereby reach below the stack of plates without touching the plates at this step of the method.

When the supporting fingers are placed well under the stack of plates, the robot head is lifted until the stack no longer rest on the conveyor. The stack rests downward against the supporting fingers and to the side against the surface member for alignment of the plates.

The moving part of the holding means of the robot head then crams the stack of plates down against the supporting fingers. The stack is hereby held in a firm grip by the robot head and the robot can now move the stack to a desired position.

When in position, the pneumatic pressure of the holding means may be lowered to an advantageous level where the pressure is high enough to prevent undesired sliding while still allowing the supporting fingers to be moved horizontally which, in turn, causes the stack of plates to be pressed against the surface member. The supporting fingers will be pulled away from under the stack as the surface member is non-movable in relation to the stack. Hereby, it is possible to push the stack off the supporting fingers and i.e. onto a pallet as shown in figure 3b. Because of the surface member, the stack is placed in a perfectly aligned stack at the correct position and with the robot's precision and high degree of freedom of movement, it is possible build a high stack of plates i.e. on a pallet where the plates are mutually and perfectly aligned.

It is understood that the robot and robot head may include different kinds of sensors to ensure that the movement and placing of a stack are performed optimally and safely. Especially, different kinds of vision techniques may be used in connection with the lifting of a stack of plates and in connection with the placing of a stack on another already placed stack. A person skilled in the art will be familiar with the general use of sensors and vision techniques in connection with robots.

### List

- 1.: Cutting machine for plates
- 2a.: First conveyor
- 2b.: Manually fed conveyor
- 3.: Worker
- 3a, 3b.: First and second robot
- 4, 4a, 4b.: Robot head for first and second robot
- 5a, 5b.: Stack of plates
- 7a-7g.: Second conveyors
- 8.: Third conveyor
- 10.: Frame
- 11a-11f.: Supporting fingers
- 12a-12d, 12f.: Holding means
- 13.: Movable part of holding means
- 14.: Connection means between robot and robot head
- 15.: Connection between holding and driving means,
- 16.: Surface member for alignment of plates
- 17.: Surface part adapted to the shape of conveyor rollers
- 18a, 18b.: Guidance rods

## Claims

1. Processing system comprising
a process station (1) for cutting a plate-like material to a number of plate-like objects (5a, 5b) or other treatments,
at least one conveyor (2a, 2b, 7a-7g, 8) for transporting said plate-like objects (5a, 5b) after cutting or other treatments
**characterised in that**
said processing system further comprises at least one robot (3a, 3b) with a robot head (4a, 4b), and
where said robot head (4a, 4b) has gripping means (19) for gripping a stack comprising one or more plate-like objects (5a, 5b).

2. Processing system according to claim 1, **characterised in that** said stack (5a, 5b) comprises wooden plates.

3. Robot head (4) for handling one or more plates (5a, 5b) comprising
at least two supporting fingers (11a-11f) for insertion below the plates (5a, 5b),
a frame (10) including
holding means (12a;12d, 12f) for clamping said plates (5a, 5b) against said supporting fingers (11a-11f) and
a surface member (16) for alignment of said plates (5a, 5b),
and a movement actuator for providing a relative movement between said supporting fingers (11a-11f) said surface member (16).

4. Robot head according to claim 3 **characterised in that** a movable part (13) of said holding means (12a;12d, 12f) is movable by means of pneumatic means.

5. Robot head according to claim 4 **characterised in that** said pneumatic means comprises pressure control means.

6. Robot head according to any of the claims 1-5 **characterised in that** said holding means (12a;12d, 12f) and said supporting fingers (11a-11f) are placed above each other in pairs.

7. Robot head according to any of the claims 1-6 **characterised in that** the fingers (11a; 11f) are divided into two groups (11a; 11c respective 11d; 11f) with the same number of fingers in each.

8. Robot head according to claim 7 **characterised in that** the distance between the two groups (11a; 11c respective 11d; 11f) of fingers substantially corresponds to the mid section of a standard or special pallet.

9. Method of moving a stack comprising one or more plate-like objects from a conveyor to another position with at least one robot having a robot head,
where said robot head grips said stack by means of at least two supporting fingers of said robot head are inserted below the plates and the holding means of said robot head clamps said plates against said supporting fingers,
where the plates are lifted by at least one robot and moved to another position, and
where said supporting fingers are moved relative to said surface member and hereby release the plates from the robot head.

10. Method of moving one or more plates according to claim 9 **characterised in that** the pneumatic pressure on one or more of the holding means is controlled during handling of the plates.

11. Use of a robot with a robot head according to claims 3 to 8 and use of a method of moving one or more plates with a robot having a robot head according to claims 9 and 10 in a wooden plate processing system.
